# EUROPEAN PATENT APPLICATION

(11) **EP 2 338 389 A1**
(43) Date of publication of application: **29.06.2011**
(21) Application number: 09180800.6
(22) Date of filing: 28.12.2009
(51) Int. Cl.: A47J 27/05, A47J 31/54

(54) **Steam generator**

(71) Applicant: Koninklijke Philips Electronics N.V., 5621 BA Eindhoven (NL)
(72) Inventor: Van Aken, Timotheus, J M, 5600 AE, Eindhoven (NL); Van Wifferent, Reindert, J, 5600 AE, Eindhoven (NL)
(74) Representative: Damen, Daniel Martijn

(57) **Abstract**

The invention concerns a steam generator, such as a food steamer. The steam generator comprises: a water reservoir (3); a water boiler (16) having a boiler outlet (22) for steam and a boiler inlet (17) for water; and an inlet member (19) connecting the reservoir (3) to the boiler inlet. The reservoir (3) is arranged above the boiler to feed water from the reservoir to the boiler by gravity. The boiler comprises a tubular boiler chamber (28) extending from said boiler inlet (17) to said boiler outlet and a heating device (26) arranged for heating the wall of the boiling chamber. The inlet member (19) defines an inlet flow path and comprises: a non-return valve (30,31,32) arranged to prevent flow from the boiler to the reservoir; and a restriction (42), such as a partition baffle, which overlaps the entire cross section of the inlet flow path and is provided with one or more through holes (29) to restrict the flow through the inlet flow path.

## Description

### FIELD OF THE INVENTION

The invention relates to the field of steam generators, and more specifically to food steamers.

### BACKGROUND OF THE INVENTION

In house hold appliances steam generators can be of complex or relatively simple design. According to a simple design, a steam generator comprises a tube having an inlet and an outlet. A water reservoir feeds the tube with water. Water in the tube is heated to steam and steam is discharged through the outlet. This simple design can be applied in a food steamer, like the one shown in reference US D517,857 S, reference GB 2,414,925 or reference WO 2008/125,947.

The food steamer of reference GB-2,414,925 has a water heater for producing steam which exits through a steam cap. The heater comprises a water channel with a heating element directly above. In use water passes from a water tank under gravity into the water channel. When passing through the water channel, the heating element heats the water into steam. The steam exits through the steam cap into a steaming compartment for treating the food. This steam generator / food steamer does need some start up time to get in full steam production. During start up it will mainly pump water by means of steam bubbles generated. Only after a time of several minutes, like 8 minutes or more, a state of efficient steam production is reached.

The food steamer of reference WO 2008/125,947 is similar to the food steamer of reference GB-2,414,925. In order to reduce start up time, this reference suggests high heating power with a thermostat control to prevent excess steam production after the start up period. In order to avoid frequent switch on/off of the boiler, this reference suggest as alternative a high heating power by use of two heating elements, one heating element being switched off after start up when a predetermined temperature is reached. Besides a second heating element being expensive, this solution further requires that the steam outlet is provided with a steam valve with a moving element in order to control the steam venting capacity. This steam valve makes this solution not only more expensive but also susceptible to malfunctioning.

### SUMMARY OF THE INVENTION

It would be desirable to provide an alternative steam generator, such as a food steamer, having a short startup time. It would also be desirable to provide a steam generator generating a large, preferably a vast, amount of steam already shortly after the start of the steaming process. Further, it would also be desirable to provide a steam generator, such as a food steamer, having a simple design, a short start up time, and cheap components, which operates reliable.

To better address one or more of these concerns, in a first aspect of the invention a steam generator, such as a food steamer, is provided that comprises:
- a water reservoir;
- a water boiler having a boiler outlet for steam and a boiler inlet for water;
- an inlet member connecting the reservoir to the boiler inlet;
- wherein the boiler comprises a boiler chamber, such as a tubular boiler chamber, extending from said boiler inlet to said boiler outlet and a heating device arranged for heating the wall of the boiling chamber; and
- wherein the inlet member defines an inlet flow path and comprises:
- a non-return valve arranged to prevent flow from the boiler to the reservoir; and a restriction, such as a partition baffle, which overlaps the entire cross section of the inlet flow path and is provided with one or more through holes to restrict the flow through the inlet flow path.

The water reservoir can according to the invention be arranged above the boiler to feed water from the water reservoir to the boiler by gravity. A non-return valve (also called one-way-valve) arranged between a water reservoir and a water boiler to prevent backflow from the water boiler to the reservoir, is a proven and cheap concept in coffee makers, in which water coming from a reservoir is heated in a tube acting as a bubble pump transporting the heated water upwards to discharge it onto a coffee bed. Such a non-return valve is a cheap component and reliable in operation. Further, such a non-return valve is a passive element, meaning it works automatically without active control. The partition restriction, such as partition baffle, provided with one or more through holes, such as cylindrical bores, is also a passive element and restricts the flow as it fully obstructs the flow path except at the location of the through holes. Only the through holes allow the flow to pass the restriction. The restriction with one or more through holes limits the amount of water being fed to the boiler. Due to the smaller amount of water fed through the inlet, the boiler heats smaller amounts of water which results in more steam. In case of more than one through hole, adjacent through holes can be spaced at a distance larger than 1 mm.

In an embodiment the passage surface of each through hole is at least 1 mm² (which in case of a cylindrical through hole corresponds to a diameter of about 1.13 mm).

In another embodiment, the passage surface of each through hole is at least 1.5 mm² (which in case of a cylindrical through hole corresponds to a diameter of about 1.38 mm), such as in the range of 2 mm² to 6 mm². The passage surface of each through hole might have a value of 2 mm² or 5 mm² or an intermediate value. Passage surfaces as from 1.5 mm² appear to show a noticeable improvement in steam production. Passage surfaces in the range of 2 mm² to 6 mm² appear to provide a considerable improvement in steam production.

In again another embodiment, the passage surface of each through hole is at most 11 mm² (which in case of a cylindrical through hole corresponds to a diameter of about 3.7 mm) at most 8 mm² (which in case of a cylindrical through hole corresponds to a diameter of about 3.19 mm) or at most 7 mm². As from a passage surface of 8 mm², the effects of improvement of the steam production at the start of the steaming process appears to decrease. A passage surface larger than 11 mm² does not appears to provide a large increase in the steam production at the start of the steaming process.

In again another embodiment, each through hole defines a passage surface, and the sum of the passage surfaces of all said through holes is smaller than the smallest passage surface of a downstream flow path, which is defined as extending from the boiler inlet to the boiler outlet. According to this embodiment the restriction thus provides a restriction with respect to each location in the boiler. Water passing through the boiler thus is less obstructed than water passing through the restriction.

In again another embodiment, said sum of the passage surfaces of all said through holes is smaller than the smallest passage surface of the flow path upstream of the restriction. Water passing through the restriction thus is more obstructed than water flowing towards the restriction.

In again another embodiment, said sum of the passage surfaces of all said through holes is at most 33% of the smallest passage surface of said downstream flow path. With respect to improving the steam production, there appears to be some relation between the passage surface of the restriction - which is defined as the sum of the passage surfaces of all said through holes - and the passage surface in the boiler chamber - defined as the passage surface of the downstream flow path -. Experiments performed with a boiler chamber having a diameter of about 6.5 mm, indicate that when the passage surface of the restriction is larger than 33% of the passage surface in the boiler chamber, the increase in steam production at the start is not significant.

In a further embodiment, said sum of the passage surfaces of all said through holes is at most 21%, such as at most 15%, of the smallest passage surface of said downstream flow path. Experiments performed with a boiler chamber having a diameter of about 6.5 mm, indicate that a large increase in steam production at the start is achieved for a passage surface of the restriction of up to 21 % of the passage surface of the downstream flow path. A large increase in steam production at the start of the steaming process was especially observed for passage surfaces of the restriction of about 15%, about 6% (as well as for intermediate values) of the passage surface of the downstream flow path.

In again another embodiment, the steam generator comprises a foot construction defining a planar support surface, and the down stream flow path has a bottom which, viewed from the boiler inlet to the boiler outlet, continuously declines for draining liquid from the boiler inlet to the boiler outlet when said planar surface extends horizontally. This configuration ensures that water entering the boiler flows towards the outlet, preventing overheating at the outlet and ensuring a stable steam production.

In again another embodiment, the restriction is arranged downstream of the non-return valve. This provides a reliable functioning of the non-return valve.

In again another embodiment, the inlet member with the non-return valve and restriction are removable as one piece from the steam generator as well as mountable as one piece into the steam generator. In this way the steam generator can easily be cleaned. The inlet member can be removed as one piece and replaced after cleaning of the inlet member and/or other parts of the steam generator.

In again another embodiment, a vertical steam discharge member connected to the boiler outlet and extending through the reservoir is provided. This provides a space saving configuration.

In again another embodiment, the steam generator comprises an essentially closed steam chamber arranged on top of the reservoir. Products to be steamed can be processed in this steam chamber. It is noted that essentially closed leaves open the possibility that the steam chamber can be opened, or that the steam chamber has a discharge opening for discharging superfluous steam and/or for preventing an excess pressure being built up inside the steam chamber, or that the steam chamber is made from separate tubular members which can be stacked onto each other to form said steam chamber and which can be dismounted from each other for storage, cleaning or other purposes.

In again another embodiment, the steam generator comprises two or more baskets for containing a product to be steamed, wherein the two or more baskets have perforated bottoms and can be stacked onto each other. These baskets allow the product to be steamed to be distributed over the steam chamber so that all products are allowed to be contacted by the steam generated.

These and other aspects of the invention will be more readily appreciated as the same becomes better understood by reference to the following detailed description and considered in connection with the accompanying drawings in which like reference symbols designate like parts.

### BRIEF DESCRIPTION OF THE DRAWINGS

Figure 1 depicts a perspective view of food steamer according to the invention.
Figure 2 depicts an exploded view of the food steamer of figure 1.
Figure 3 depicts a more detailed exploded view of the part III as indicated in figure 2.

And Figure 4 depicts a cross sectional view of the inlet member and boiler of the food steamer of figures 1-3.

### DETAILED DESCRIPTION OF EMBODIMENTS

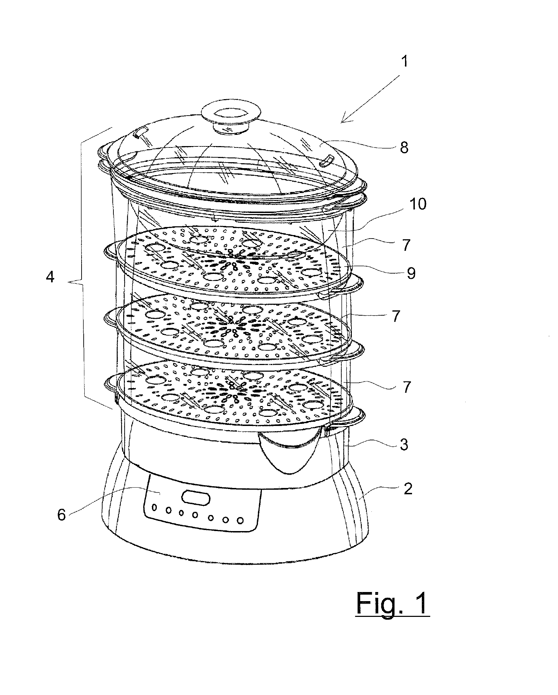

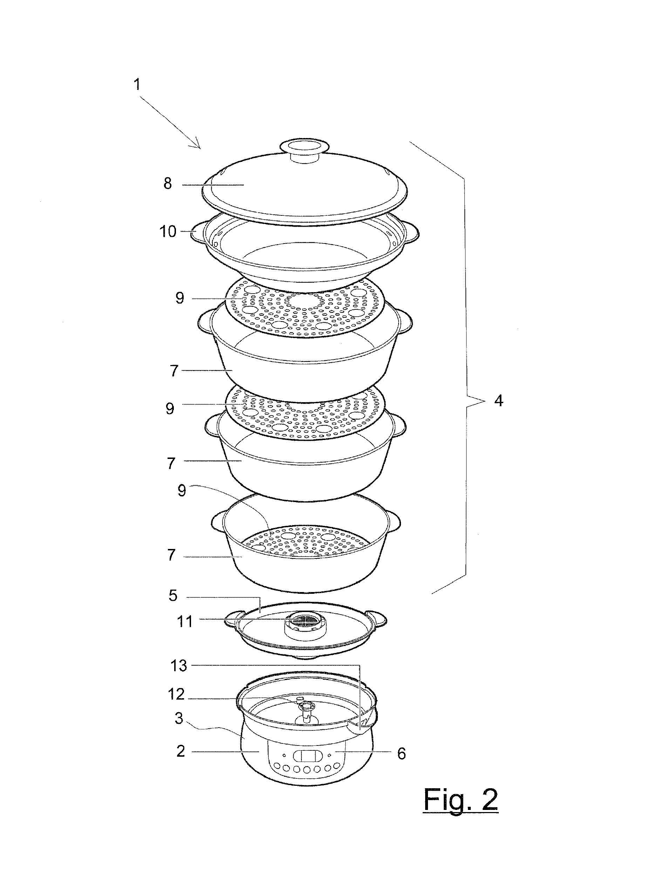

Figures 1-2 depict a food steamer 1 according to the invention. This food steamer comprises a base 2 with control panel 6, a water reservoir 3, a steam chamber 4, and a drip tray 5.

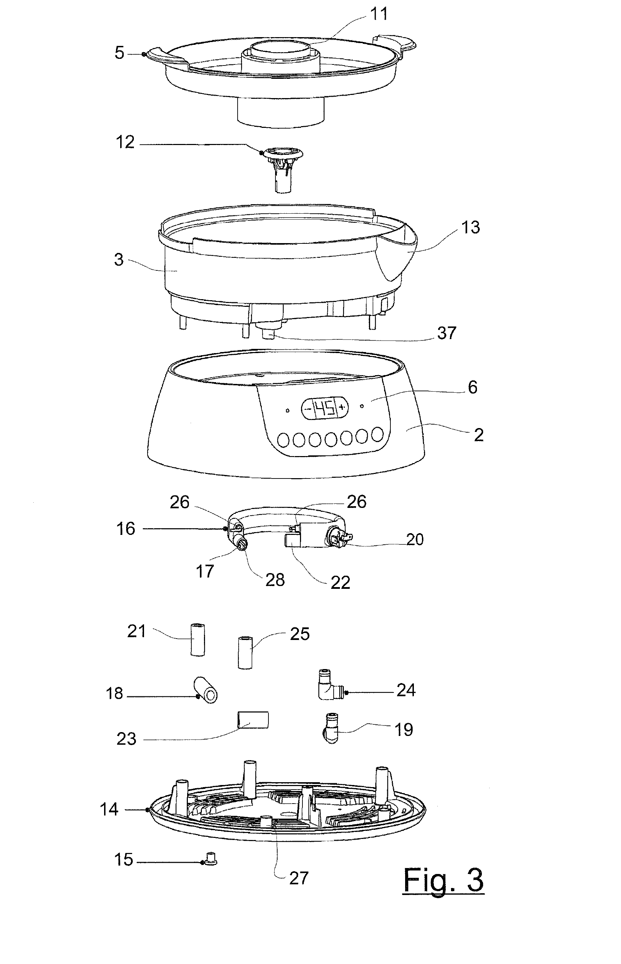

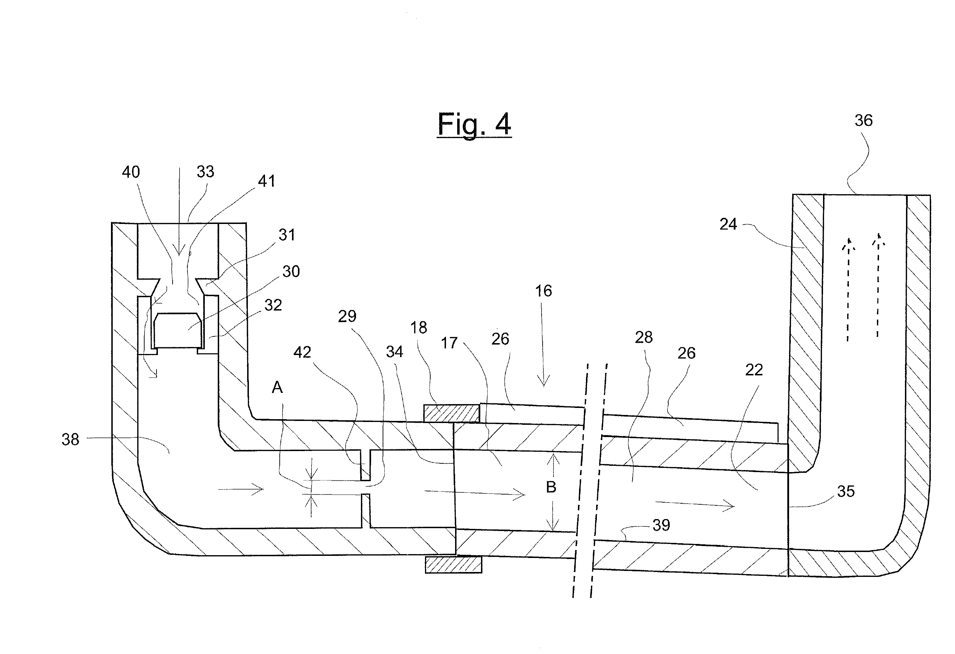

As will be discussed more detailed in relation to figures 3 and 4, in use, steam is generated in the base 2 and introduced into the steam chamber 4 at the bottom of the steam chamber.

The steam chamber is, in use, essentially closed and in this embodiment made of transparent material as can be seen in figure 1. It is however noted that the steam chamber can also be made of non transparent material or a combination of transparent and non-transparent material. In this embodiment the steam chamber is composed of 3 tubular elements 7, each having an oval cross section. These tubular elements have an open bottom and open top and can be stacked onto each other. At the lower end, the steam chamber is closed by the drip tray 5 and at the upper end the steam chamber is closed by a lid 8. The lid has optionally a discharge opening (not shown) to allow excess steam and excess pressure to be discharged. By choosing a desired number of tubular elements, the steam chamber can be given a size depending on the needs of the user. The number of used tubular elements 7 can be smaller than the 3 shown elements but also larger than the 3 shown elements. The lower side of each tubular element 7 can be provided with a perforated bottom plate 9. Although, the lowest tubular element 7 - and the optionally also the other tubular elements - might be permanently provided with a non-removable perforated bottom plate 9, the perforated bottom plates are in general removable. This allows better cleaning as well as adjusting the configuration of the steaming chamber depending on the needs. With large objects to be steamed it might be practical to remove one or more perforated bottom plates 9, with many objects it might be useful to distribute the products over several perforated bottom plates 9 (each providing a different level) to ensure that all products can have good contact with the steam. When fitted in a tubular element, the perforated bottom plate 9 and tubular element 7 together form a kind of basket. At the top of the steam chamber 4, a bowl 10 with closed bottom can optionally be provided. Such a bowl 10 can for example be used for processing soup or rice.

In use, steam is introduced in the steam chamber 4 by a steam nozzle 12 arranged in a steam entrance port 11.

Referring to figure 3, the water reservoir 3 can be filled with water by pouring water into filling port 13. A water discharge port 37 is provided in the bottom of the reservoir 3, so that water can be discharged from the reservoir by gravity.

A boiler 16 is arranged in the base 2. As the water is fed to the boiler by gravity, the boiler 16 is arranged at a lower vertical level than the reservoir 3. In this embodiment the boiler 16 is arranged right under the reservoir 3, but the boiler might be arranged at the side of the reservoir or elsewhere as well as long as its vertical level is lower than the vertical level of the reservoir. In case, according to another embodiment of the invention, a mechanical pump might be used, the boiler can also be arranged at a higher vertical level than the reservoir as the feeding of the boiler in that case does not need to be by gravity.

According to the invention, the boiler 16 comprises a tubular boiler chamber 28 - see also figure 4 - and a heating device 26 for heating the boiler chamber by heating the wall of the boiler chamber 28. The boiler has a boiler inlet 17 for feeding water into the boiler chamber 28 and a boiler outlet 22 for discharging steam from the boiler chamber 28. The boiler inlet 17 is connected to the reservoir 3 via an inlet member 19. The upstream side 33 of the inlet member 19 is connected to the discharge port 37 of the reservoir 3 and the downstream side 34 of the inlet member is connected to the boiler inlet 17 by means of a connector tube 18. The boiler outlet 22 is connected to the steam nozzle 12 via a connector tube 23 (not shown in figure 4) and a bend pipe 24 having a upstream end 35 facing the boiler and a downstream end facing the steam nozzle 12. In use, water will be fed from the reservoir 3 to the boiler chamber 28, in the boiler chamber 28 it will be heated into steam and discharged to the steam nozzle 12, as is indicated by arrows, the dashed arrows representing steam. A thermostat 20 - figure 3 - might be provided to enable control of the heating device 26.

Referring to figure 4, the inlet member 19 is according to the invention provided with a non-return valve 30, 31, 32 (also called one-way valve). This non-return valve has been indicated very schematically. Basically, the non-return valve according to the invention comprises a movable valve member 30 and a valve seat 31. The movable valve member 30 will be moved in downstream direction to the open position (shown) by the static pressure of water in the reservoir and - if arranged to move vertically - also by gravity. When downstream of the non-return valve pressure builds up due to steam formation or other causes, the movable valve member 30 will be forced in upstream direction to close against the seal and consequently interrupt the supply of water from the reservoir 3.In order to keep the movable valve member 30 in place guide members 32 might be provided. It is noted that according to the invention, the actual design might be quite different than the one shown in figure 4. Thus, other embodiments of the invention which might have a different design - falling within the scope of the invention - are anticipated.

Further referring to figure 4, the inlet member 19 is also provided with a restriction 42 (which is in the shown embodiment a partition baffle 42) having a through hole 29. This partition baffle 42 overlaps the entire cross section of the inlet flow path 38, meaning that it would close the flow path 38 in case the through hole 29 would be absent. The through hole 29 allows a limited amount of water to pass and thus restricts the feed of water. The through hole is in this embodiment a bore having circular cross section, but might have a differently shaped cross section. The effect of this is that the start up time (i.e. the time needed as from start to deliver a large amount of steam) of the steam generator, in this embodiment a food steamer, can be reduced from about 8-10 minutes or more to about 1 minute. The steam production after the start up time is still efficient and sufficient for good functioning of the steam generator.

It is noted that non-return valves (synonym for one-way valve) are usually designed so that the passage surface of the flow path through the valve is of such a size that the fluid flow downstream is sufficient. This in order to prevent that the non-return valve influences the flow in the flow path downstream of the valve and/or upstream of the valve. In order to reduce any influence, the passage surface of the flow path through the valve is generally oversized with respect to the fluid flow required downstream (and/or up stream) of the valve. Taking this into account, according to another embodiment of the invention, the restriction can be obtained by reducing the passage opening 40 in the seat of the valve and/or by reducing the spacing (which is in general an about axial play) between the movable valve member and valve seat when the valve is in fully open position. Reducing this spacing (play) can be achieved, for example, by shortening the length of the valve guides 32.

Experimental tests with a boiler having a tubular boiling chamber 28 with a constant circular diameter B of 6.5 mm and having a non-return valve having a valve passage surface of about 12.5 mm² (round bore having diameter of 4 mm), indicate that:
- when the passage surface A of the restriction is larger than 33% of the passage surface B in the tubular boiling chamber 28, the effect of reduced start up time (up to large steam production) is less noticeable;
- when the passage surface A of the restriction is between 2% up to 21 % of the passage surface B in the tubular boiling chamber 28, the effect of reduced start up time is highly remarkable, especially for passage surface A being between 2% to 15% of the passage surface B. Reductions of start up time to about 1 minute were achieved.

Referring to figure 4 it is further noted that according to the invention, the stability of the steam production during start up is considerably improved by a arranging the boiler chamber 28 such that the bottom 39 of the boiling chamber is declining from the boiler inlet 17 towards the boiler outlet 22. In this manner it is ensured that water entering the boiling chamber drains automatically to or towards the boiler outlet and is not accumulated in between. Although in figure 4, the boiler is shown interrupted and straightened in one plane (instead being about circular as shown in figure 3), it can clearly be seen that the bottom 39 at boiler outlet 22 lies at a lower vertical level than the bottom 39 at the boiler inlet 17 as well as that - in this specific embodiment - the bottom 39 of the boiler chamber continuously declines. The declining of the bottom 39 of the boiler chamber 28 can however also be discontinuously, for example in a stepped manner. The horizontal reference level for the declining (or draining) bottom 39 of the boiler chamber 28 is defined by the foot construction 14, 15 of the base 2 of the food steamer 1. The base 2 comprises a bottom plate 14. This bottom plate carries a number of feet 15 - in general 3, 4 or 5 feet - received in opening 27. The lower ends of the feet 15 together define a planar support face.

In addition to highly reducing the start-up time needed up to sufficient steam production (this start-up timer can be reduced from several minutes (8-10 minutes or more to about one minute), the present invention also enables a considerable reduction (-20%) of heating power required by the steam generator.

The present invention can be further described as represented in the next following clauses:
1) Steam generator, such as a food steamer, wherein the steam generator comprises:
   - a water reservoir;
   - a water boiler having a boiler outlet for steam and a boiler inlet for water;
   - an inlet member connecting the reservoir to the boiler inlet;
   - wherein the boiler comprises a boiler chamber extending from said boiler inlet to said boiler outlet and a heating device arranged for heating the wall of the boiling chamber; and
   - wherein the inlet member defines an inlet flow path and comprises:
   - a non-return valve arranged to prevent flow from the boiler to the reservoir; and
   - a restriction which overlaps the entire cross section of the inlet flow path and is provided with one or more through holes to restrict the flow through the inlet flow path.
2) Steam generator according to clause 1, wherein the boiler chamber is a tubular boiler chamber.
3) Steam generator according to one of the preceding clauses, wherein the water reservoir is arranged above the boiler to feed water from the reservoir to the boiler by gravity.
4) Steam generator according to one of the preceding clauses, wherein the restriction comprises or is a partition baffle overlapping the entire cross section of the inlet flow path
5) Steam generator according to one of the preceding clauses, wherein the passage surface of each through hole is at least 1 mm².
6) Steam generator according to one of the preceding clauses, wherein the passage surface of each through hole is at least 1.5 mm², such as in the range of 2 mm² to 6 mm².
7) Steam generator according to one of the preceding clauses, wherein the passage surface of each through hole is at most 11 mm², such as at most 8 mm² or at most 7 mm².
8) Steam generator according to one of the preceding clauses, wherein each through hole defines a passage surface, and wherein the sum of the passage surfaces of all said through holes is at least 1.5 mm², such as in the range of 2 mm² to 6 mm².
9) Steam generator according to one of the preceding clauses, wherein each through hole defines a passage surface, and wherein the sum of the passage surfaces of all said through holes is at most 11 mm², such as at most 8 mm² or at most 7 mm².
10) Steam generator according to one of the preceding clauses, wherein each through hole defines a passage surface, and wherein the sum of the passage surfaces of all said through holes is smaller than the smallest passage surface of a downstream flow path extending from the boiler inlet to the boiler outlet.
11) Steam generator according to clause 10, wherein said sum of the passage surfaces of all said through holes is smaller than the smallest passage surface of the flow path upstream of the restriction.
12) Steam generator according to one of the clauses 10-11, wherein said sum of the passage surfaces of all said through holes is at most 33% of the smallest passage surface of said downstream flow path.
13) Steam generator according to one of the clauses 10-12, wherein said sum of the passage surfaces of all said through holes is at most 21 %, such as at most 15%, - like in the range of 2% to 15% - of the smallest passage surface of said downstream flow path.
14) Steam generator according to one of the preceding clauses, wherein the steam generator comprises a foot construction defining a planar support surface, and wherein the down stream flow path has a bottom which, viewed from the boiler inlet to the boiler outlet, continuously declines for draining liquid from the boiler inlet to the boiler outlet when said planar surface extends horizontally.
15) Steam generator according to one of the preceding clauses, wherein the restriction is arranged downstream of the non-return valve.
16) Steam generator according to one of the preceding clauses, wherein the inlet member with the non-return valve and restriction are removable as an integral part from the steam generator as well as mountable as an integral part into the steam generator.
17) Steam generator according to one of the preceding clauses, comprising a vertical steam discharge member connected to the boiler outlet and extending through the reservoir.
18) Steam generator according to one of the preceding clauses, comprising an essentially closed steam chamber arranged on top of the reservoir.
19) Steam generator according to one of the preceding clauses, comprising one or more baskets for containing a product to be steamed, wherein the one or more baskets have perforated bottoms.

Summarizing, the invention concerns a steam generator, such as a food steamer. The steam generator comprises: a water reservoir; a water boiler having a boiler outlet for steam and a boiler inlet for water; and an inlet member connecting the reservoir to the boiler inlet. The reservoir is arranged above the boiler to feed water from the reservoir to the boiler by gravity. The boiler comprises a tubular boiler chamber extending from said boiler inlet to said boiler outlet and a heating device arranged for heating the wall of the boiling chamber. The inlet member defines an inlet flow path and comprises: a non-return valve arranged to prevent flow from the boiler to the reservoir; and a constriction, such as partition baffle, which overlaps the entire cross section of the inlet flow path and is provided with one or more through holes to restrict the flow through the inlet flow path.

As required, detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in virtually any appropriately detailed structure. Further, the terms and phrases used herein are not intended to be limiting, but rather, to provide an understandable description of the invention.

Further it is to be noted that, although the drawings show the invention in relation to a food steamer, the invention has a broader use. The invention concerns a steam generator, which can also be used in other devices like a coffee machine, an iron or other device in which steam generation is desired.

The terms "a" or "an", as used herein, are defined as one or more than one. The term plurality, as used herein, is defined as two or more than two. The term another, as used herein, is defined as at least a second or more. The terms including and/or having, as used herein, are defined as comprising (i.e., open language, not excluding other elements or steps). Any reference signs in the claims should not be construed as limiting the scope of the claims or the invention.

The mere fact that certain measures are recited in mutually different dependent claims does not indicate that a combination of these measures cannot be used to advantage.

The term connected as used herein means directly or indirectly connected. In as far as the term connected is used in relation to a channel for passing water or steam, the term means that there is a fluid connection which might by directly coupling to channel parts or indirectly coupling two channel parts.

## Claims

1. Steam generator, such as a food steamer, wherein the steam generator comprises:
- a water reservoir;
- a water boiler having a boiler outlet for steam and a boiler inlet for water;
- an inlet member connecting the reservoir to the boiler inlet;
- wherein the boiler comprises a boiler chamber extending from said boiler inlet to said boiler outlet and a heating device arranged for heating the wall of the boiling chamber; and
- wherein the inlet member defines an inlet flow path and comprises:
- a non-return valve arranged to prevent flow from the boiler to the reservoir; and
- a restriction which overlaps the entire cross section of the inlet flow path and is provided with one or more through holes to restrict the flow through the inlet flow path.

2. Steam generator according to claim 1, wherein the restriction comprises or is a partition baffle overlapping the entire cross section of the inlet flow path.

3. Steam generator according to claim 1 or 2, wherein the passage surface of each through hole is at least 1 mm².

4. Steam generator according to one of the preceding claims, wherein the passage surface of each through hole is at least 1.5 mm², such as in the range of 2 mm² to 6 mm².

5. Steam generator according to one of the preceding claims, wherein the passage surface of each through hole is at most 11 mm², such as at most 8 mm² or at most 7 mm².

6. Steam generator according to one of the preceding claims, wherein each through hole defines a passage surface, and wherein the sum of the passage surfaces of all said through holes is smaller than the smallest passage surface of a downstream flow path extending from the boiler inlet to the boiler outlet.

7. Steam generator according to claim 6, wherein said sum of the passage surfaces of all said through holes is smaller than the smallest passage surface of the flow path upstream of the restriction.

8. Steam generator according to one of the claims 6-7, wherein said sum of the passage surfaces of all said through holes is at most 33% of the smallest passage surface of said downstream flow path.

9. Steam generator according to one of the claims 6-8, wherein said sum of the passage surfaces of all said through holes is at most 21 %, such as at most 15%, - like in the range of 2% to 15% - of the smallest passage surface of said downstream flow path.

10. Steam generator according to one of the preceding claims, wherein the steam generator comprises a foot construction defining a planar support surface, and wherein the down stream flow path has a bottom which, viewed from the boiler inlet to the boiler outlet, continuously declines for draining liquid from the boiler inlet to the boiler outlet when said planar surface extends horizontally.

11. Steam generator according to one of the preceding claims, wherein the restriction is arranged downstream of the non-return valve.

12. Steam generator according to one of the preceding claims, wherein the inlet member with the non-return valve and restriction are removable as an integral part from the steam generator as well as mountable as an integral part into the steam generator.

13. Steam generator according to one of the preceding claims, comprising a vertical steam discharge member connected to the boiler outlet and extending through the reservoir.

14. Steam generator according to one of the preceding claims, comprising an essentially closed steam chamber arranged on top of the reservoir.

15. Steam generator according to one of the preceding claims, comprising one or more baskets for containing a product to be steamed, wherein the one or more baskets have perforated bottoms.
